# EUROPEAN PATENT SPECIFICATION

(11) **EP 2 662 597 B1**
(45) Date of publication and mention of the grant of the patent: **13.07.2016**
(21) Application number: 13166571.3
(22) Date of filing: 05.05.2013
(51) Int. Cl.: F16H 55/17, B23P 15/14, B23P 11/00

(54) **An idler gear assembly, as well as an internal combustion engine comprising the idler gear assembly, and a method for fixing a bushing in a through bore of a gear of the idler gear assembly**
Freilaufendes Doppelzahnrad sowie Verbrennungsmotor mit einer derartigen Zahnradanordnung, und Verfahren zur Befestigung mit einer Buchse in einer Durchgangsbohrung eines der Zahnräder der Zahnradanordnung
Ensemble d'engrenages intermédiaires, ainsi qu'un moteur à combustion interne comprenant ledit ensemble d'engrenages intermédiaires et procédé de fixation d'une douille dans un alésage traversant d'un engrenage de l'ensemble d'engrenages intermédiaires

(30) Priority: 08.05.2012 NL 2008769
(43) Date of publication of application: 13.11.2013
(73) Proprietor: VCST Industrial Products BVBA, 3800 Sint-Truiden (BE)
(72) Inventor: Camps, Gerald, 3950 Bocholt (BE); Destreel, Dagmar, 3500 Hasselt (BE); Vandewal, Bart, B-3970 Alken (BE)
(74) Representative: Verhees, Godefridus Josephus Maria

(56) References cited:
- EP-A1- 1 544 487
- DE-A1-102005 060 999
- DE-C- 849 942
- GB-A- 2 029 300

## Description

### Technical filed of the invention

The invention relates to an idler gear assembly comprising at least one gear provided with an inner through bore and a thin walled bushing press-fitted into the bore, which gear assembly is provided with additional axial fixation means which axially fixate the bushing in the bore, said additional axial fixation means comprises at least one radial outward deformation of the wall of the bushing.

The invention further relates to an internal combustion (IC) engine comprising an idler gear assembly which is part of a valve timing gear transmission, and to a method for fixing a bushing in a through bore of a gear of an idler gear assembly, comprising press-fitting of the bushing into the bore followed by machining, grinding and/or honing the inner diameter of the bushing.

### Background of the invention

Such an idler gear assembly and method is generally known. An idler gear used in an IC engine is in most cases provided with a steel backed bronze or aluminum lined thin walled bushing. These thin walled bushings have excellent sliding and load bearing capacity. The steel back provides enough strength so the bushing can be press-fit into the bore of the gear.

When manufacturing such an idler gear assembly a forged disk is quenched and tempered to the correct core hardness and turned to more accurate dimensions. A through hole with an accurate inner diameter (ID) is provided. The disk is provided with tooth by a gear hobbing operation. After the hobbing of the gear teeth the bushing is pressed into the inner ID of the gear. After the press-fit the ID of the bushing is accurately machined with a turning operation; grinding operation or honing operation. Most of the time a circumferential oil groove is provided into the middle of the thin walled bushing so in operation oil is fed over the full contact width of the bearing surface so friction is reduced. After the latter operation the teeth of the gear tooth can be ground in relation of the accurate machined or ground inner diameter of the bushing.

In normal conditions the press-fit of the bushing will be sufficient to axial retain the bushing into the gear body. However, in some conditions engine failures have been noticed in the field where the root cause seems to be the axial displacement of the busing relative to the gear body.

A compound idler gear existing of a first small diameter gear and a second large diameter gear and provided with a bushing into the bore of the first or the second gear is coaxial placed in a hub rotational and axial fixed to the engine block. On the front and on the back side of the gear body axial thrust washers are placed to provide smooth guidance between the rotating idler gear and the engine housing on one side and an axial locking plate on the other side. The axial locking plate is fixed to the hub.

The first gear needs to be rotational fixed to the second gear. This is usual done with a press-fit. Depending from first: the geometry; material strength; material elasticity; press-fit width; the diameter and the tolerances on the diameter and second: the transmitting torque, the rotational fixation needs to be secured with additional measures. A common used solution is a laser weld between the first and second gear.

In case the first or second gear is press-fit on a shoulder/collar of the first or second gear, the press fit will deform the inner diameter of the first or second gear. The ID of the gear in which the bushing is pressed and the ID of the bushing itselves will be slightly tapered. Because of this tapering, the axial forces of the helical gear teeth, load reversals and the vibrations in the engine the bushing can start to move axial relative to the gear body. Because of the small radial surface of the thin walled bushing, and the high axial forces in case of a helical gear transmission, the bushing will damage the thrust washer and directly come in contact with the metal plate or engine block and this way the bushing will wear, after a while the idler gear centering will fail resulting in tooth breakage and final engine failure in case the gear is part of a valve timing driving gear train. So the axial fixation of the bushing in the idler gear body only by the press-fit seems in some conditions not be sufficient and extra axial fixation means needs to be provided.

A gear according to the preamble of claim 1 is known from EP1544487A1.

### Summary of the invention

It is an object of the present invention to provide an idler gear assembly and method of the type defined in the opening paragraph in which a thin walled bushing is press-fit into a gear in such a way that a secured axial fixation of the bushing is realized that is economical producible for a high volume application and used in an IC engine subjected to high radial and axial loads in case of use of helical gear transmission and subjected to engine vibrations and a wide range of engine temperature conditions (-40°C / 140°C), without loosing bearing contact length and without loosing structural strength.

To this end the idler gear assembly according to the invention is characterized in that the additional axial fixation means further comprises a circular groove provided in the internal surface of the bore in which groove the radial outward deformation of the bushing is located.

An embodiment of the idler gear assembly according to the present invention is characterized in that the inside of the radial outward deformation constitutes is an oil groove.

A further embodiment of the idler gear assembly according to the present invention is characterized in that the gear is a compound gear comprising two gear wheels, one of these gear wheels has a collar on which the other gear wheel is press-fitted. Preferably the gear teeth are helical.

The invention further relates to an internal combustion engine comprising an idler gear assembly according to the present invention.

An embodiment of the internal combustion engine according to the present invention is characterized in that the idler gear assembly is part of a valve timing gear transmission.

The invention yet further relates to a method for fixing a bushing in a through bore of a gear of an idler gear assembly according to the present invention, comprising press-fitting of the bushing into the bore followed by machining, grinding and/or honing the inner diameter of the bushing. With respect to the method the invention is characterized in that an outer radial deformation is made in the bushing during or after the press-fitting operation.

An embodiment of the method according to the present invention is characterized in that the outer radial deformation is made by pressing the internal surface of the bushing radial outward by means of a circular rolling operation or forcing pins after the bushing is press-fitted into the bore of the gear.

### Brief description of the drawings

The invention will be further elucidated below on the basis of drawings. These drawings show an embodiment of the idler gear assembly according to the present invention. In the drawings:
Figure 1 shows a valve timing gear transmission of an internal combustion engine;
Figure 2 is an idler gear assembly of the valve timing gear transmission shown in figure 1;
Figure 3 is a cross section of the idler gear assembly shown in figure 2;
Figure 4 is a detail of the idler gear assembly showing additional axial fixation means;
Figure 5 is the idler gear assembly in cross section just before forcing the wall of the bushing radial outward; and
Figure 6 is the idler gear assembly in cross section during forcing the wall of the bushing radial outward.

### Detailed description of the drawings

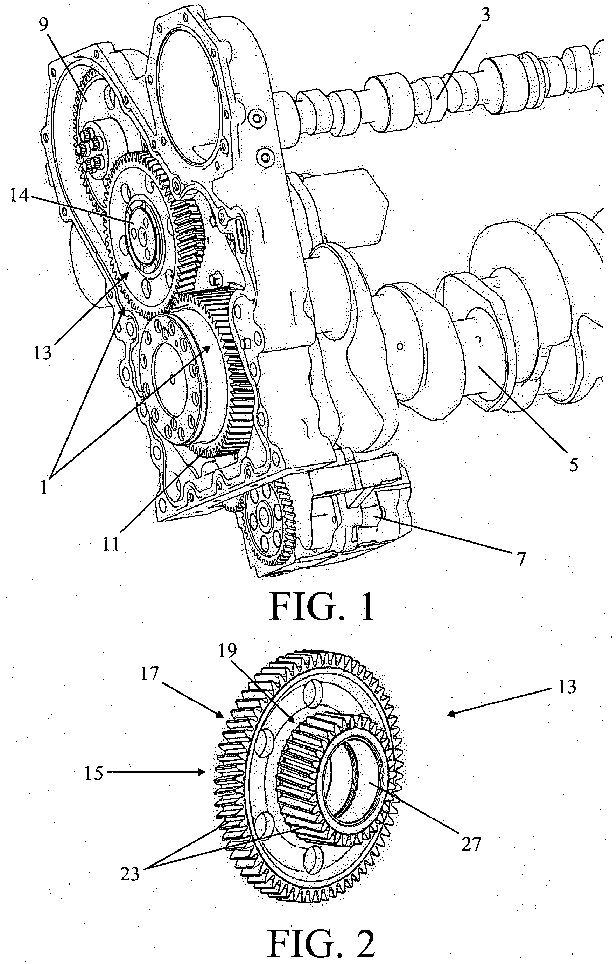

In Figure 1 a valve timing gear transmission of an internal combustion engine is shown. For the sake of clarity, only the valve timing gear transmission 1, the camshaft 3, crankshaft 5 and water pump 7 of the combustion engine are shown. The valve timing gear transmission 1 has a cam gear 9 connected to the camshaft, a crank gear 11 connected to the crankshaft and an idler gear assembly 13 connecting both gears and being present on an idler shaft 14.

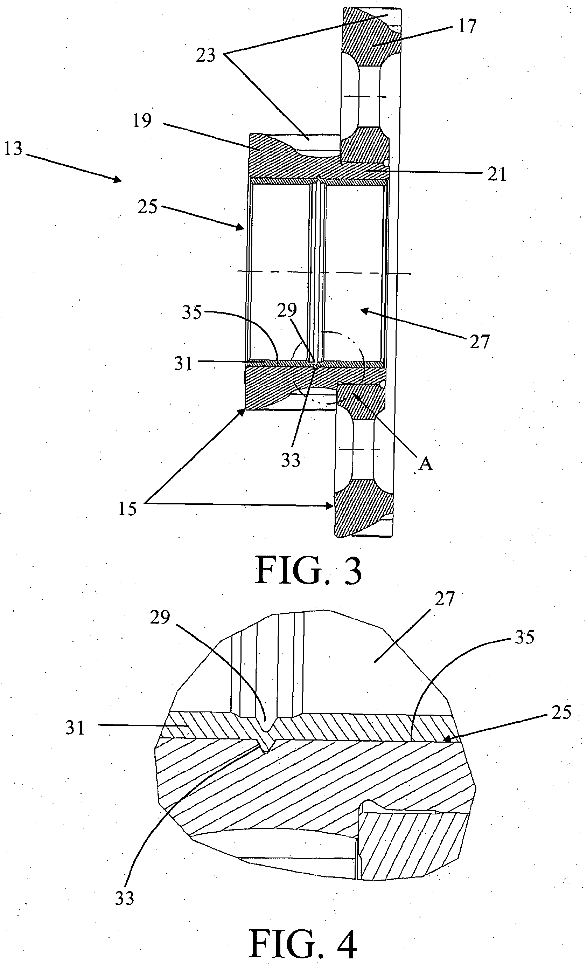

In figures 2 and 3 the idler gear assembly 13 is shown in perspective view and in cross section. The idler gear assembly 13 has a compound gear 15 consisting of two gear wheels 17 and 19. One of these gear wheels 17 has a collar 21 on which the other gear wheel 19 is press-fitted. The gear wheels are provided with helical toothing 23 and a through bore 25. Into the bore 25 a thin walled bushing 27 is press-fitted.

The idler gear assembly 13 is provided with additional axial fixation means to fixate the bushing 27 in the bore 25 in axial direction. These additional axial fixation means are constituted by a circular radial outward deformation 29 of the wall 31 of the bushing 27 and a circular groove 33 provided in the internal surface 35 of the bore 25. In figure 4 a detail of the idler gear assembly indicated by arrow A in figure 3 is showed. This detail shows the additional axial fixation means. The radial outward deformation 29 of the bushing is located in the groove 33 and constitutes an oil groove.

This outer radial deformation 29 is made by pressing the internal surface 35 of the bushing 27 radial outward by means of a circular rolling operation after the bushing is press-fitted into the bore 25 of the gear. Then the inner diameter of the bushing is machined, grinded and/or honed.

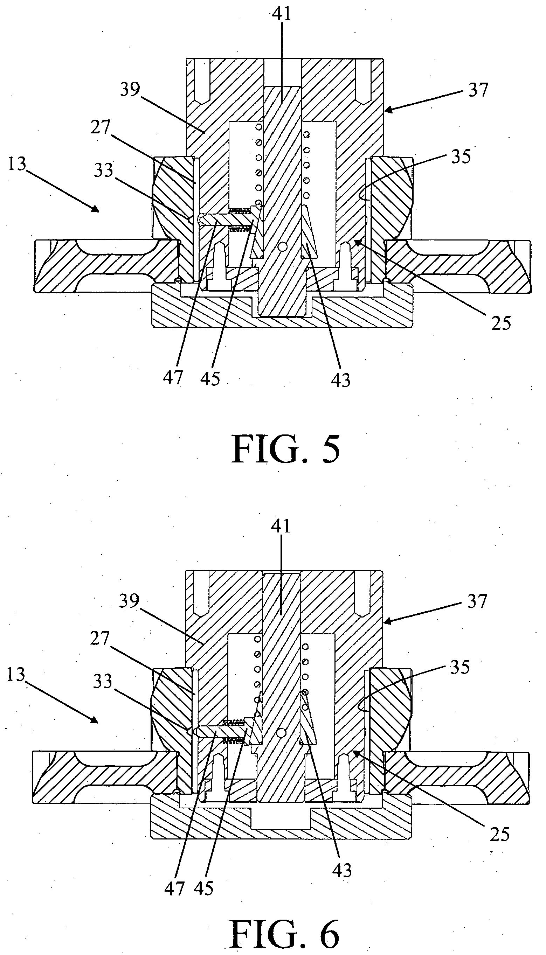

In figures 5 and 6 a method of forcing the wall 31 of the bushing radial outward into the groove 33 provided in the internal surface 35 of the bore 25 is shown. In figure 5 the idler gear assembly 13 is shown in cross section just before forcing and in figure 6 the idler gear assembly 13 is shown during forcing the wall of the bushing 27 radial outward. The tool 37 for forcing the wall of the bushing consists of a hollow cylinder 39 with a moving core 41 inside. Around a part of the core a conical ring 43 is present and cooperates with conical elements 45 to which pins 47 are fixed. By moving the core 41 the pins 47 are moved radial outward and force the wall of the bushing 27 into the groove 33 in the bore 25.

Although the present invention is elucidated above on the basis of the given drawings, it should be noted that this invention is not limited whatsoever to the embodiments shown in the drawings. The invention also extends to all embodiments deviating from the embodiments shown in the drawings within the context defined by the claims. Instead of forcing the wall of the bushing radial outward with the use of pins as shown in figures 5 and 6, the wall could also be deformed by a rolling method as for example described in DE849942C.

## Claims

1. An idler gear assembly (13) comprising at least one gear provided with an inner through bore (25) and a thin walled bushing (27) press-fitted into the bore, which gear assembly is provided with additional axial fixation means which axially fixate the bushing in the bore, said additional axial fixation means comprises at least one radial outward deformation (29) of the wall of the bushing, **characterized in that** the additional axial fixation means further comprises a circular groove (33) provided in the internal surface of the bore in which groove the radial outward deformation of the bushing is located.

2. Idler gear assembly (13) according to claim 1, **characterized in that** the inside of the radial outward deformation (29) constitutes an oil groove.

3. Idler gear assembly (13) according to claim 1 or 2, **characterized in that** the gear is a compound gear (15) comprising two gear wheels (17, 19), one of these gear wheels has a collar on which the other gear wheel is press-fitted.

4. Idler gear assembly (13) according to any one of the preceding claims, **characterized in that** the gear teeth are helical.

5. Internal combustion engine comprising an idler gear assembly (13) according to any one of the preceding claims.

6. Internal combustion engine according to claim 5, **characterized in that** the idler gear assembly (13) is part of a valve timing gear transmission (1).

7. Method for fixing a bushing (27) in a through bore (25) of a gear of an idler gear assembly (13) according to any one of the preceding claims 1 to 4, comprising press-fitting of the bushing (27) into the bore (25) followed by machining, grinding and/or honing the inner diameter of the bushing, **characterized in that** an outer radial deformation is made in the bushing during or after the press-fitting operation.

8. Method according to claim 7, **characterized in that** the outer radial deformation is made by pressing the internal surface of the bushing (27) radial outward by means of a circular rolling operation or forcing pins (47) after the bushing is press-fitted into the bore of the gear.

## Patentansprüche

1. Zwischengeschaltete Zahnradeinheit (13), die mindestens ein Zahnrad mit einer durchgehenden Bohrung (25) und einer dünnwandigen, in die Bohrung gepressten Buchse (27) aufweist, welche Zahnradeinheit zusätzlich axiale Fixierungsmitteln aufweist, die die Buchse in axialer Richtung in der Bohrung fixieren, welche zusätzlichen Fixierungsmittel mindestens eine radial nach außen ragende Verformung (29) der Buchsenwand aufweisen, **dadurch gekennzeichnet, dass** die zusätzlichen axialen Fixierungsmittel eine kreisförmige Nut (23) an der Innenfläche der Bohrung aufweisen, wobei die radial hervorstehende Verformung der Buchse in der Nut anwesend ist.

2. Zwischengeschaltete Zahnradeinheit (13) nach Anspruch 1, **dadurch gekennzeichnet, dass** die Innenseite der radial hervorragenden Verformung (29) eine Ölnut bildet.

3. Zwischengeschaltete Zahnradeinheit (13) nach Anspruch 1 oder 2, **dadurch gekennzeichnet, dass** das Zahnrad ein Verbundzahnrad (15) mit zwei Zahnrädern (17, 19) ist, wobei eines dieser Zahnräder eine Schulter aufweist, auf die das andere Zahnrad gepresst ist.

4. Zwischengeschaltete Zahnradeinheit (13) nach einem der vorgenannten Ansprüche, **dadurch gekennzeichnet, dass** die Zahnräder eine Schrägverzahnung haben.

5. Verbrennungsmotor, der eine zwischengeschaltete Zahnradeinheit (13) nach einem der vorgenannten Ansprüche aufweist.

6. Verbrennungsmotor nach Anspruch 5, **dadurch gekennzeichnet, dass** die zwischengeschaltete Zahnradeinheit (13) Teil eines Steuerzeiten-Zahnradgetriebes (1) ist.

7. Arbeitsweise für das Fixieren einer Buchse (27) in einer durchgehenden Bohrung (25) eines Zahnrads einer zwischengeschalteten Zahnradeinheit (13) nach einer der vorgenannten Ansprüche 1 bis 4, die das Pressen der Buchse (27) in die Bohrung (25) umfasst, gefolgt von einer spanabhebenden Bearbeitung, Schleifen und/oder Honen des Innendurchmessers während oder nach dem Pressen.

8. Arbeitsweise nach Anspruch 7, **dadurch gekennzeichnet, dass** die äußere radiale Verformung hergestellt ist, indem die Innenfläche der Buchse (27) radial nach außen gedrückt wird mittels einer kreisförmigen Rollbearbeitung oder durch Verstiftung (47) forciert, nachdem die Buchse in die Bohrung des Zahnrads gepresst ist.

## Revendications

1. Assemblage de pignons intermédiaires (13) comprenant au moins un pignon pourvu d'un alésage traversant (25) et d'un manchon à paroi fine (27) qui est inséré en force dans l'alésage, lequel assemblage de pignons est pourvu de moyens de fixation axiale supplémentaires qui fixent le manchon en direction axiale dans l'alésage, lesquels moyens de fixation supplémentaires comprennent au moins une déformation radiale saillante (29) de la paroi du manchon, **caractérisé en ce que** les moyens de fixation axiale supplémentaires comprennent une rainure circulaire (23) se trouvant dans la surface intérieure de l'alésage, où la déformation radiale saillante du manchon se trouve dans la rainure.

2. Assemblage de pignons intermédiaires (13) selon la revendication 1, **caractérisé en ce que** l'intérieur de la déformation radiale saillante (29) constitue une rainure de lubrification.

3. Assemblage de pignons intermédiaires (13) selon la revendication 1 ou 2, **caractérisé en ce que** le pignon est un pignon composé (15) comprenant deux pignons (17,19), où l'un de ces pignons comprend un col sur lequel est inséré en force l'autre pignon.

4. Assemblage de pignons intermédiaires (13) selon une des revendications précédentes, **caractérisé en ce que** les pignons ont une denture hélicoïdale.

5. Moteur à combustion comprenant un assemblage de pignons intermédiaires (13) selon une des revendications précédentes.

6. Moteur à combustion selon la revendication 5, **caractérisé en ce que** l'assemblage de pignons intermédiaires (13) fait partie d'un rapport de vitesses à calage de soupapes (1).

7. Procédé pour fixer un manchon (27) dans l'alésage traversant (25) d'un pignon d'un assemblage de pignons intermédiaires (13) selon une des revendications 1 à 4 précédentes, comprenant l'insertion en force du manchon (27) dans l'alésage (25), suivi de l'usinage, de l'aiguisage et/ou de l'alésage du diamètre intérieur pendant ou après l'opération d'insertion.

8. Procédé selon la revendication 7, **caractérisé en ce que** la déformation radiale externe est réalisée en poussant radialement la surface intérieure du manchon (27) vers l'extérieur à l'aide d'une opération de roulement circulaire ou en forçant des clavettes (47) après que le manchon est inséré en force dans l'alésage du pignon.
